# EUROPEAN PATENT SPECIFICATION

(11) **EP 0 342 143 B1**
(45) Date of publication and mention of the grant of the patent: **31.08.1994**
(21) Application number: 89500056.0
(22) Date of filing: 08.05.1989
(51) Int. Cl.: F16C 1/22

(54) **Automatic tension regulator for traction cables guided by flexible conduits**
Automatische Spannvorrichtung für ein in einer biegsamen Hülle geführtes Zugkabel
Régulateur automatique de tension de câbles de traction guidés dans une gaine flexible

(30) Priority: 09.05.1988 ES 8801432
(43) Date of publication of application: 15.11.1989
(73) Proprietor: DISPOSITIVOS DE ACCESORIOS DE PUERTAS, S.A., E-09007 Burgos (ES)
(72) Inventor: Romero Magarino, Antonio, E-09006 Burgos (ES)
(74) Representative: Urteaga Simarro, José Antonio

(56) References cited:
- DE-A- 2 014 129
- FR-A- 2 580 745

## Description

There are certain parts of machines, such as clutch or carburetor components, etc., which make use of a kinematic chain formed by a cable, in which it is of interest to keep the tension of the said cable as constant as possible, even in spite of wear being caused to other intermediate items. In general, this is a logical necessity when a cable is used to operate a lever, a piston, a vehicle window-winder, etc. from a distance.

In all the applications mentioned either a turnbuckle is used with its corresponding lock nut which regulates the tension of the whole, or a compensation or take-up system by means of two cylindrical springs that act on the guides of the opposite ends of the flexible conductor.

In the first of these cases, when access to the system is difficult and play starts to appear in the cable, there is no way of later adjusting its tension, which causes noises and lack of travel, as a result of its becoming loose.

In the second case, and although the tension remains relatively constant, the operational travel gets longer and longer and therefore loses sensitivity or overtravel increases, such as happens with vehicle window-winders, which at first show dead angular travel which is relatively small, and reach really exaggerated amounts with use.

The aim of the patent is to prevent these problems of traditional arrangements, by managing to compensate for any lengthening that might be produced and ensuring that the cable remains constantly tense at all times.

Known mechanisms of this type are described in patents GB-A-1,302,388 and US-A-4,833,937.

The patent GB-A-1,302,383 relates to a mechanism made up of a part (38) with a screw-threaded interior (42) and another part (36) for adjustment which is threaded (44) to the part (40). Both screw threads are helicoidal and a spring (70) is placed between the two parts. In order to adjust the assembly, a part (40) is used which includes a cover (58).

For the required adjustment of the system, the cover (58) is removed from one position to the other (Figs. 5 and 6) and the parts (38) and (36) are screwed towards the right or towards the left, after which the cover (58) is replaced.

There is, therefore, a manual intervention on the part of the user for this purpose, which is an inconvenience.

The patent US-A-4,833,937 relates to a mechanism with a part (36) with a screw-threaded projection that is housed in the screw-threaded interior (21) of another part (2). Both screw threads are helicoidal and a spring (5) is placed between the two parts. The screw-threaded portion (34) of the part (36) is provided with two parallel planes (37) in which a washer (4) with a hole (41) of the appropriate shape is received.

The washer travels along the screw-threaded portion (34) and because of the projection (7) it becomes housed in the recesses (6) in the front of the part (2).

For the required adjusment of the system, the parts (36) and (2) are screwed towards the right or towards the left, and the washer (4) is placed in the position desired.

There is also a manual intervention on the part of the user for this purpose, which is an inconvenience.

Therefore, the basic aim of the patent is to obtain an extremely simple device to fulfil the proposed aims.

The device in question is made up of three small parts made of thermoplastic material, obtained by injection, and a helicoidal spring.

One of these parts is a cylindrical casing, hollow on the inside, through which the cable is passed, with this cylindrical casing having a series of circumferentially equidistant grooves cut on its outside and by way of a thread with an angular profile and pitch determined depending on what is of interest. These grooves will occupy a certain length, which will be determined in terms of the total stretching that has to be considered througout the working life of the appliance.

The ends of the said casing are each provided with cylindrical prolongations. One of these prolongations acts as a guide on the support casing and the other receives the cable conductor.

An element in the form of a nut, with internal grooves of an opposite profile to that of the previously mentioned hollow cylindrical casing, is fitted against the circumfertial grooves of this casing, with the internal grooves being cut over dentated parts of special geometry which allow,by flection or bending, radial displacement parallel to the axis of these dentated parts when it is a question of displacing the hollow cylindrical casing towards the area of the cable conductor, but which make it impossible for this displacement to be made in the opposite direction.

This displacement in the opposite direction is also prevented by the fact that the casing in the form of a nut rests on the support, which has an internal conical ring with a specific angle, with the grooved, dentated parts of the nut-like casing being supported on this ring, while the dentated parts are conical but in the opposite direction. In this way, when the support or mutual contact is carried out, it makes the grooves of the hollow cylindrical casing and of the nut-like casing fit tightly together.

The support-casing can form an integral part of the member that receives the automatic tension regulator or a simple support bushing on the corresponding support, as will be explained later in connection with the drawings.

The end of the hollow cylindrical casing through which the cable conductor is lodged, is connected to a support by a kind of clip by means of tongues of the said support, so that once that it has been inserted, it cannot be extracted.

A helicoidal spring acts between the nut-like casing and this support, maintaining the tension at all times between both parts, so that when the cable lengthens, due to its own distension (slackening) or because of wear on the items on which it acts or is conducted, the nut-like casing slides over the hollow cylindrical casing, and given that the latter cannot move back in the opposite direction, as mentioned earlier, its tension or adjustment, which is that of the spring, is maintained at all times. The characteristics of this spring will be calculated to provide the tension required within a maximum and a minimum, within the field of operation reserved for the spring.

To carry out the assembly of the patent, proceed as follows:
- With the cable previously inserted into the cable-support, the support and the helicoidal spring are made to slide over the said cable-support.
- The assembly formed by the hollow cylindrical casing and the nut-like casing, with the latter previously having been placed over the former, is arranged on the cable, through the end of the cable conductor side, leaving free the channel which has to clip the support.
- With the items thus arranged, the hollow cylindrical casing and the nut-like casing are made to penetrate the support, and the cable conductor tube over the hollow cylindrical casing, which allows the cable to be fastened, without any tension, at the ends of the device.
- Later, the helicoidal spring is made to slide towards the bottom of a throat in the nut-like casing and then compressed, by pushing it with the support until it clips into the hollow cylindrical casing.
- On releasing the pressure on the support, the tension of the spring separates the said support and the nut-like casing, with which all the system becomes adjusted to the tension given by the spring.
- In accordance with this arrangement, and once that it has been carried out, any lengthening or slackening which might be produced will be compensated in the same way and the cable will, therefore, remain constantly tensed.

All these and other details of the patent are shown on the sheets of drawings which are attached, in which they are described as follows:
- Figure 1 shows the whole of the patent and a cable with its conductor.

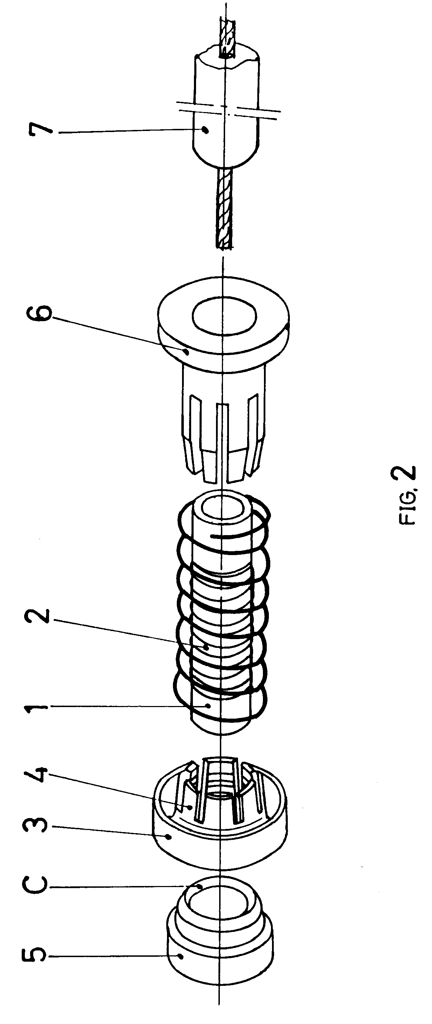

- Figure 2 is a perspective view of the different components of the patent.
- Figures 3 and 4 show the stages of assembly of the patent.

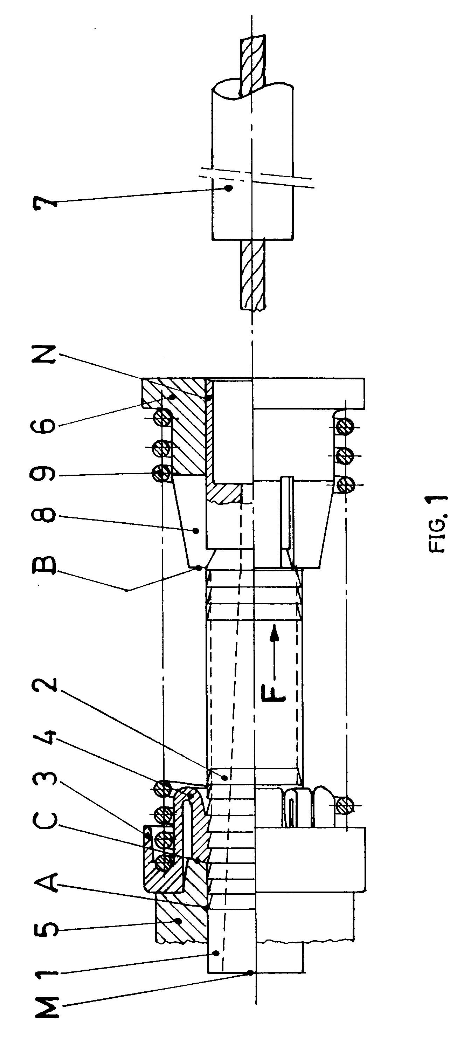

In accordance with figure 1, we can see a cable with its conductor (7), towards the right, and the whole of the patent towards the left. The latter is made up of the cylindrical casing (1), hollow on its inside, which has a series of grooves (2) cut on its outside like a screw thread, which partly occupy the length of the casing (1), from position (A) to position (B). The ends outside (A) and (B) are straight cylindrical sections, in one of which the support-casing (5) is housed, while the cable conductor (7) enters into the other.

Towards the side of the support-casing (5) and over the casing (1), a part (3) like a nut is fitted, The inside of this part (3) is provided with grooves with an opposite profile to those of the casing (1), with dentated parts of special geometry, which make it possible for the casing (1) to be moved towards the right, as shown by (F), but do not allow any movement in the opposite direction.

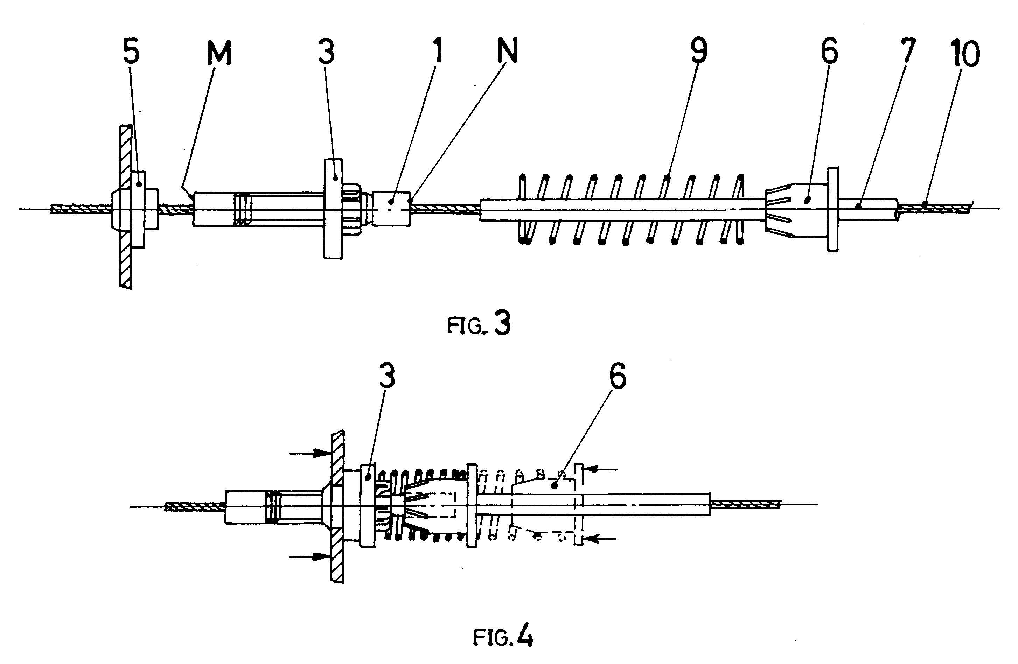

This displacement of the casing (1) towards the left is impossible, moreover, because of the way that the dentated clip or nut (3) is supported on the conical ring (C) of the support-casing (5). This support (5) can be an integral part of the member that receives the automatic tension regulator , or a simple support bushing on the corresponding support, as shown in figures 3 and 4.

The other end of the casing (1) is clipped to the support (6) by means of the tongues (8) (figs. 1 and 3), in such a way that suitable fastening is achieved so that the support (6) cannot be taken outside.

Placed between the nut-like casing (3) and the support (6), we can see the helicoidal spring (9), housed in a recess in (3) and over the said support.

The assembly of the device can be deduced from figs. 3 and 4, with the cable (10) passing through the following parts, the support (5) and the casing (1) with the nut (3) over it. The cable (10) is clasped or surrounded by the conductor (7), which in its turn receives the spring (9) and the support (6).

The nut-like casing (3) is previously placed over the casing (1), with penetration being carried out from end (N), so that a channel of the casing (1) is left free on the said side (N), for the support (6) to be placed later. One in this arrangement, the assembly (1) - (3) is made to penetrate, through end (M), into the support (5), and at the same time the left end of the conductor (7) over (1), (fig. 4), which fastens the cable at the ends of the device, although without any tension, due to the fact that the spring (9) has not yet been positioned and is not, therefore, exercising any kind of pressure.

With the assembly thus set up, the spring (9) is inserted into the throat of the nut-like casing (3) and then compressed (fig. 4) with the support (6) until this support (6) becomes clipped, by the channel in end (N), over the casing (1). Finally, and on releasing pressure on the support (6), the tension of the spring (9) itself separates (3) and (6), with which the system becomes adjusted to the specific tension of the spring.

## Claims

1. Automatic tension regulator for traction cables guided by flexible conduits, provided with a hollow cylindrical casing (1) which receives in its interior a cable conductor (7) and a cable (10), and is surrounded on the exterior by a spring (9) controlled between two end parts, the tension regulator being characterized by:
- the hollow cylindrical casing (1) having a central portion provide with circumferential grooving (2) and two straight ends (M,N), one of these ends (M) receiving a support (5), while the other end (N) receives another support (6) which by means of a set of tongues (8) is attached on the outside of the casing (1) in the said end (N), and with the cable conductor (7), together with the cable (10), being received in this support (6)
- a clip or nut (3), provided on its interior with a set of circumferential grooves of similar characteristics to those on the casing (1), although inverted in relation to them, the clip (3) including an interal portion (c) which is conical, and in contact with an end portion, also conical, of the support (5), whereby this clip (3) is mounted over the casing (1) on its circumferential grooved central portion
- a spring (9) whose ends are received in a recess in the clip (3) and in the support (6).

2. Automatic tension regulator for traction cables guided by flexible conduits, in accordance with claim 1, characterized in that the support (6) can be arranged on the casing (1) by clipping it onto the grooves (2) of the casing (1) with its tongues (8) in the appropriate place in terms of the tension which is determined by the spring (9).

## Patentansprüche

1. Automatischer Zugspannungsregler für in flexiblen Führungen geführte Zugkabel bestehend aus einem hohlan zylindrischen Mantel (1), der einen Führungskabel (7) und einen kabel (10) trägt, und von einer Feder (9) umhüllt ist, die zwischen beiden Enden reguliert wird, dadurch gekennzeichnet, dass
- der hohle zylindrische Mantel (1) ein Mittenbereich mit kreisförmigen Rinnen (2) und zwei geraden Enden (M, N) hat, von denen eins (M) auf eine Stütze (5) und das andere (N) auf eine andere Stütze (6) befestigt IST, welche mittels einen Satz Federn (8) auf dem Aussenmantel (1) im gesagten Ende (N) und zusammen mit der kabelführung (7) und dem kabel (10), die sich in dieser Stütze befinden, befestigt sind,
- Eine Klemme oder Mutter (3), die innenseitlich kreisförmige Nuten angeordnet hat, die ähnlich denen des Mantels (1) sind, aber in umgekehrter Weise angeordnet, die innenseitlich über ein kegeliges Bereich (c) verfügt, das in Kontakt mit einem Ende das kegeligen Bereiches der Stütze (5) kommt, wobei die Klemme (3) über dem Mantel (1) in der kreisförmig genuteten Mittenbereich montiert ist,
- eine Feder (9,) deren Enden in eine Aussparung der Klemme (3) und in der Stütze (6) befestigt ist.

2. Automatischer Zugspannungsregler für in flexiblen Führungen geführte Zugkabel gemäss Anspruch 1, dadurch gekennzeichnet, dass die Stütze (6) an dem Mantel (1) angeordnet sein kann, indem die Stütze (6) mit den Rinnen (2) des Mantels (1) und die Federn (8) an geeignetem Platz befestigt wird, entsprechend der Zugkraft, die von der Feder (9) bestimmt wird.

## Revendications

1. Règulateur de tension automatique pour câbles de traction guidés par des conduits souples, pourvu d'une carcasse cylindrique creuse (1) dans laquelle viennent se loger un câble conducteur (7) et un câble (10) entouré d'un ressort (9) contrôlé entre deux extrémités, la régulateur de tension se caractérisant par:
- Le carcasse cylindrique creuse (1), laquelle se présente avec une partie centrale munie de rainures circonférencielles (2) et de deux bouts droits (M, N), dont l'un (M) logeant un support (5), alors que l'autre bout (N) loge un autre support (6), lequel, par un jeu de languettes (8), va s'attacher à l'extérieur de la carcasse (1) à ladite extrémité (N) et au câble conducteur (7), ainsi que le câble (10), logé dans ce support (6).
- Un étrier ou écrou (3), présentant à l'intérieur un ensemble de rainures circonférentielles aux caractéristiques similaires à celles que présente la carcasse (1), bien qu'en sens contraire par rapport à elles, l'ètrier (3) comprenant une section interne (c), de structure conique, se trouvant en contact avec l'une des parties extrêmes également conique du support (5) tandis que cet étrier (3) se trouve monté sur la carcasse (1), sur sa partie centrale rainurée circonférentielle.
- Un ressort (9) dont les extrémités se trouvent logées dans un rentrant de l'étrier (3) et dans le support (6).

2. Régulateur de tension automatique pour câbles de traction guidés dans des conduits souples, conformément à la revendication 1, caractérisé dans la fait que le support (6) peut être disposé sur la carcasse (1) en le fixant sur les rainures (2) de cette dernière avec ses languettes (8) à l'endroit opportun pour ce qui est de le tension déterminée par le ressort (9).
